# EUROPEAN PATENT APPLICATION

(11) **EP 4 822 523 A1**
(43) Date of publication of application: **14.10.2026**
(21) Application number: 25170026.6
(22) Date of filing: 11.04.2025
(51) Int. Cl.: G06F 8/38, G05B 19/409

(54) **METHOD AND SYSTEM FOR AUTOMATICALLY GENERATING OPTIMIZED HUMAN-MACHINE INTERFACE (HMI) SCREEN TEMPLATES**

(71) Applicant: Siemens Aktiengesellschaft, 80333 München (DE)
(72) Inventor: N A, Sajana, 560068 Bangalore, Karnataka (IN)
(74) Representative: Isarpatent

(57) **Abstract**

A computer-implemented method and system (102) for automating the generation of human-machine interface (HMI) screen templates is disclosed. The method involves extracting design parameters, device statuses, and key performance indicators (KPIs) from industrial automation systems modeling interdependencies using a knowledge graph, and resolving ambiguities through prompts sent to a domain-trained large language model. Optimized HMI screen templates are generated based on contextual information, tailored to improve operator responsiveness and usability. The system enables real-time adaptability by updating screen templates in response to factory changes or operator feedback. Validation and simulation modules ensure functionality by simulating operator interactions. Continuous learning updates machine learning models to refine designs based on feedback and evolving requirements. Deployed templates enhance factory operations by improving usability and aligning with operational goals.

## Description

The present disclosure relates to the generation and optimization of human-machine interface (HMI) screen templates for industrial automation systems. Specifically, it focuses on leveraging artificial intelligence, including natural language processing (NLP) and machine learning, to automate the creation, deployment, and iterative improvement of HMI screen templates, enhancing usability, operator responsiveness, and operational efficiency in factory environments.

Human-Machine Interface (HMI) screens play a critical role in industrial automation systems, serving as the primary medium through which operators and technicians monitor, control, and optimize manufacturing processes. In many industrial environments, Siemens' Totally Integrated Automation (TIA) portal functions as a centralized platform for configuring and managing these systems, including the design and deployment of HMI screens. While the TIA portal provides a robust suite of tools, the process of creating HMI screens has traditionally relied on extensive manual effort, requiring specialized personnel to design and configure each screen from scratch. This conventional approach is not only labor-intensive but also prone to human error, often resulting in increased project costs and elongated timelines.

The traditional method of HMI screen creation within the TIA portal involves manually designing the layout, logic, and functionality of each screen. Engineers must painstakingly arrange visual elements-such as graphs, indicators, and input fields-and map these elements to specific devices and parameters. Additionally, ensuring uniformity in style, configuration, and interdependencies across multiple screens demands significant expertise and attention to detail. Organizations frequently depend on highly skilled labor to meet these demands, which escalates costs while increasing the likelihood of errors or inconsistencies in the final design.

To mitigate these challenges, some workflows incorporate pre-designed screen templates or libraries as an alternative to fully manual development. These templates provide users with preconfigured layouts or widgets that can be adapted to fit project-specific requirements. While this approach can streamline certain aspects of the design process, it still necessitates considerable customization to meet the unique demands of each industrial application. Users are required to expend significant effort to ensure that the templates align with system requirements, accommodate device interdependencies, and adhere to operational standards. Furthermore, pre-designed templates often fail to address complex industrial parameters, such as tolerance thresholds and intricate relationships between factory devices, leaving many of the original challenges unresolved.

Although pre-designed libraries and templates offer a partial solution, they do not fully automate the HMI screen creation process or provide guidance on critical parameters such as device interdependencies, material tolerances, or system KPls. As industrial processes evolve, static templates struggle to adapt, increasing the likelihood of production inefficiencies, overlooked alerts, and suboptimal layouts. The need for continuous updates and adjustments exacerbates dependency on skilled operators, perpetuating the challenges of time consumption, design errors, and high labor costs.

In this context, there is a pressing need for an advanced automated approach to HMI screen creation.

Thus, it is an object of the present invention to provide a method and system for automatically generating optimized human-machine interface (HMI) screen templates, which improve usability, efficiency, and operator responsiveness in industrial automation systems.

The object of the present disclosure is achieved by a computer-implemented method for automatically generating optimized human-machine interface (HMI) screen templates, which improve usability, efficiency, and operator responsiveness in industrial automation systems. HMI screen templates refer to visually and interactively structured templates that enable operators to monitor and control industrial processes, displaying elements such as device controls, key performance indicators (KPIs), alarms, and real-time device statuses.

The method comprises extracting a plurality of design parameters from a user prompt by applying natural language processing (NLP). The user prompt provides input from operators or system designers, specifying requirements for the HMI screen template. For example, a prompt such as "Generate a screen template for monitoring temperature and pressure with alarm thresholds and device control ranges" informs the system about desired functionalities. The extracted design parameters include elements like operational ranges for device controls, system performance metrics for KPIs, and alarm thresholds, along with layout characteristics such as color schemes and font styles.

The method further comprises generating a knowledge graph that represents a plurality of interdependencies among the extracted design parameters, KPIs, and real-time device statuses. The knowledge graph is constructed using graph neural networks (GNNs) to model relationships between entities such as device controls, performance metrics, and alarm conditions. For instance, the graph captures dependencies like the influence of temperature settings on energy efficiency or the triggering of alarms based on abnormal pressure levels. The knowledge graph serves as the foundation for understanding operational dynamics and optimizing screen templates.

The method further comprises extracting a plurality of design guidelines from the knowledge graph using a supervised learning algorithm trained on historical design data and the plurality of design parameters. Design guidelines provide actionable recommendations for visual and interactive arrangements, such as optimal placement of navigation menus, high-contrast color schemes for critical alerts, and user-friendly layouts tailored to specific industrial environments. The extraction process incorporates preprocessed data, including KPI measurements, device specifications, and tolerance levels, as well as insights from historical user preferences and common design patterns derived from existing HMI screen templates.

The method further comprises transmitting a prompt to a large language model to generate at least one HMI screen template. The transmitted prompt includes information indicative of the design guidelines and additional contextual factors such as operator skill level and factory layout. For example, if the operator is a novice, the prompt emphasizes simplified navigation and prominent visual cues. The large language model processes the prompt to produce optimized HMI screen templates that align with user needs and factory-specific configurations.

The method further comprises deploying the generated HMI screen template into an industrial automation system to improve operator responsiveness. Deployment involves configuring the screen template within the system, mapping interactive elements to corresponding devices, and ensuring compatibility with factory hardware and software platforms. For instance, control buttons are linked to device actuators, and dashboards displaying KPIs are integrated with monitoring systems. The deployed screen template enhances operator interactions by providing real-time feedback, intuitive controls, and clear visualizations of factory operations.

The method further comprises automatically suggesting layout modifications, color schemes, and font styles for the generated HMI screen template based on usability metrics. Usability metrics, derived from simulated interactions and operator feedback, evaluate factors such as accessibility, visual clarity, and interaction intuitiveness. For example, the method may suggest relocating frequently used controls to central areas of the screen or replacing low-contrast text with high-contrast alternatives for improved readability.

The method further comprises providing a user interface for operators to preview and customize the generated HMI screen templates before deployment. Operators can adjust elements such as layout structures, color coding, and font styles, ensuring the screen template meets specific operational and aesthetic preferences.

The method further comprises detecting operator feedback associated with interactions with the generated HMI screen template. Feedback, captured through logs, surveys, or sensors, offers insights into usability challenges and areas for improvement. For example, repeated errors in activating controls or delayed responses to alarms indicate design elements requiring refinement.

The method further comprises updating a machine learning (ML) model based on the detected operator feedback. The updating process involves retraining or fine-tuning the ML model using augmented training data that incorporates insights from operator interactions. For instance, the ML model learns to prioritize layouts that improve navigation efficiency or enhance the visibility of critical alerts.

The method further comprises applying reinforcement learning to iteratively improve the ML model based on operational feedback and evolving factory requirements. Reinforcement learning uses reward signals derived from usability metrics and system performance data to guide the ML model's learning process, ensuring continuous adaptation to dynamic industrial environments.

The method further comprises analyzing operator interaction patterns with the HMI screen template to identify areas for usability improvement. Interaction patterns, such as frequent navigation delays or overlooked alerts, are analyzed to uncover inefficiencies and inform targeted design modifications.

The object of the present invention is also achieved by a programming system capable of automatically generating optimized human-machine interface (HMI) screen templates. The programming system comprises one or more processor(s) and a memory coupled to the processor. The memory comprises an automation module stored in the form of machine-readable instructions executable by the processor. The automation module is configured for performing the method as described above.

The object of the present invention is also achieved by a computer-program product, having machine-readable instructions stored therein, that when executed by a processing unit is configured to perform the above described method steps.

The present disclosure is further described hereinafter with reference to illustrated embodiments shown in the accompanying drawings, in which:
- FIG 1: is a block diagram of an environment for automated generation of an HMI screen template, according to an embodiment of the present disclosure;
- FIG 2: is a block diagram of a programming system, such as those shown in FIG. 1, in which an embodiment of the present disclosure can be implemented;
- FIG 3: is a block diagram of an automation module, such as those shown in FIG 2, in which an embodiment of the present disclosure can be implemented; and
- FIG 4: is a process flowchart illustrating an exemplary method automating test execution for a user interface, according to an embodiment of the present disclosure.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

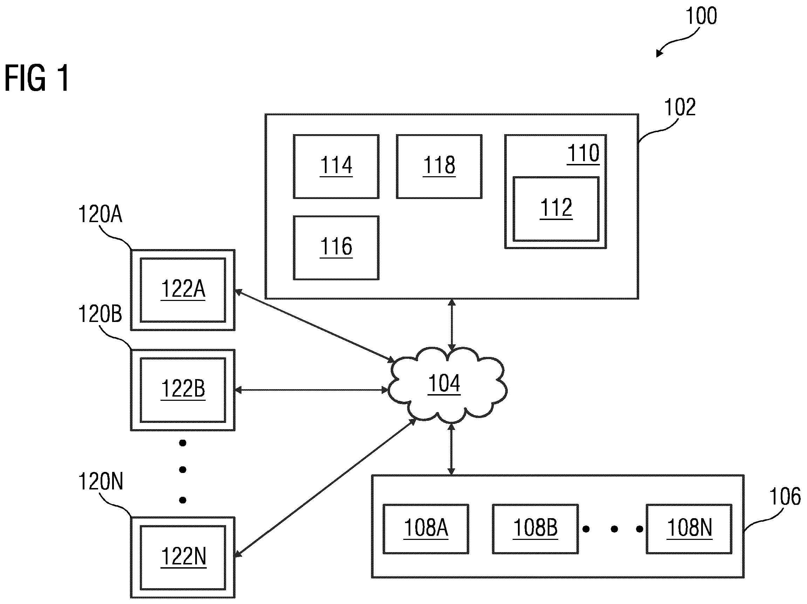

FIG. 1 is a block diagram of a factory environment 100 for automating the generation of optimized human-machine interface (HMI) screen templates, according to an embodiment of the present disclosure. In FIG. 1, the factory environment 100 includes a programming system 102, a user interface 106, and one or more client devices 120A-N. As used herein, "factory environment" refers to a processing environment comprising configurable computing physical and logical resources, such as networks, servers, storage, applications, and services distributed over a platform, such as a cloud computing platform. The factory environment 100 provides on-demand network access to a shared pool of configurable computing resources. The programming system 102 is communicatively connected to a user interface via the network 104 (such as Local Area Network (LAN), Wide Area Network (WAN), Wi-Fi, Internet, or other communication protocols). The programming system 102 is also connected to the one or more client devices 120A-N via the network 104.

The user interface 106 comprises one or more screen elements 108A-N. Examples of the one or more screen elements 108A-N include, for instance, device controls, alarm indicators, dashboards, sliders, and dropdown menus. The user interface 106 is designed for managing and monitoring industrial automation systems. The one or more screen elements 108A-N are operated by execution of a plurality of software modules in a controller device of the user interface 106. The controller device is configured to execute the software modules and control the one or more screen elements 108A-N to achieve specific operational objectives in the user interface 106. In one example, the controller device may be a cloud-based server or an industrial control system.

Each screen element of the one or more screen elements 108A-N has a plurality of properties described in technical documentation, such as HMI design guidelines, interaction flow diagrams, and operational manuals. The plurality of properties includes, but is not limited to, compatibility information, display settings, operational ranges, interaction states, and lifecycle management details. The plurality of documents further comprises process-related documents like user stories, use cases, and design specifications, as well as non-process documents such as user manuals, style guides, and compliance documents. Additionally, the plurality of documents includes information associated with the interdependencies between the properties of the screen elements.

The programming system 102 is connected to the one or more screen elements 108A-N in the user interface 106 via the network 104. The one or more screen elements 108A-N may also be connected to other industrial devices and sensors (not shown in FIG. 1) via physical and non-physical connections, such as loT networks and 5G communication protocols. Although FIG. 1 illustrates the programming system 102 connected to one user interface 106, one skilled in the art can envision that the programming system 102 can be used to generate and deploy a large number of HMI screen templates across multiple factory environments.

The one or more client devices 120A-N may include desktop computers, laptops, tablets, smartphones, and similar computing devices. Each of the one or more client devices 120A-N is provided with a design tool 122A-N for generating and/or editing the user interface 106. For example, the one or more client devices 120A-N can access the programming system 102 to automatically generate at least one HMI screen template. The one or more client devices 120AN can also access cloud applications (such as visualizing factory performance metrics) via a web browser. Throughout the specification, the terms "client device" and "user device" are used interchangeably.

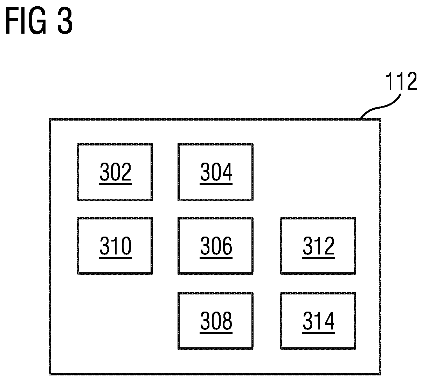

The programming system 102 may be a standalone server deployed at a control station or a remote server hosted on a cloud computing platform. In a preferred embodiment, the programming system 102 is a cloud-based programming system capable of delivering applications for managing the user interface 106 comprising the one or more screen elements 108A-N. The programming system 102 may include a platform 110 (such as a cloud computing platform), an automation module 112, a server 114, a network interface 116, and a database 118. The server 114 may include hardware resources such as processors and memory units for storing machine-readable instructions and applications. The platform 110 enables functionalities such as data reception, processing, rendering, and communication using the hardware resources of the server 114. The automation module 112 is configured for generating optimized HMI screen templates, as described in FIG. 3.

The database 118 stores information related to the user interface 106 and the one or more client devices 120A-N. The database 118 may be structured as an SQL or NoSQL data store and may reside locally or on the cloud. Examples of stored information include design guidelines, user interaction logs, simulation results, screen element configurations, and operational metrics such as KPls.

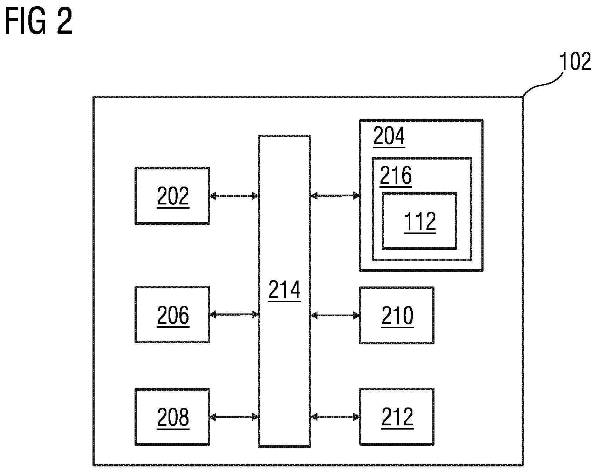

FIG. 2 is a block diagram of the programming system 102, such as the one shown in FIG. 1, in which an embodiment of the present disclosure can be implemented. In FIG. 2, the programming system 102 includes a processing unit 202, a memory 204, a storage unit 206, a communication interface 208, an input-output unit 210, a network interface 212, and a bus 214.

The processing unit 202 may be any type of computational circuit, such as a microprocessor, microcontroller, or graphics processing unit. The memory 204 may include volatile and nonvolatile memory for storing machine-readable instructions, which may execute automation processes such as generating HMI screen templates. The storage unit 206 may store databases, such as the database 118, containing design data and user feedback.

The communication interface 208 enables communication between the programming system 102 and the client devices 120A-N, allowing engineers to interact with the generated HMI screen templates. The input-output unit 210 may include devices such as touchscreens or keyboards for providing user inputs. The network interface 212 manages network connectivity, such as LAN, WAN, or wireless communication.

Those of ordinary skill in the art will appreciate that the hardware depicted in FIG. 2 may vary for specific implementations. The depicted example is provided for explanatory purposes and is not intended to imply architectural limitations.

Those skilled in the art will recognize that, for simplicity and clarity, the full structure and operation of all data processing systems suitable for use with the present disclosure is not being depicted or described herein. Instead, only so much of the programming system 102 as is unique to the present disclosure or necessary for an understanding of the present disclosure is depicted and de-scribed.

It is noted that the user interface 106 represents visual and interactive components that allow users to interact with an application program. The user interface 106 comprises a plurality of user-interactable visual elements such as buttons, sliders, and readouts, which facilitate control of the application program.

When executed by the processing unit 202, the automation module 112 causes the processing unit 202 to automatically generate optimized human-machine interface (HMI) screen templates. The automation module 112 causes the processing unit 202 to extract the plurality of design parameters from the user prompt using natural language processing (NLP). The human-machine interface screen templates serve as the predefined layouts or structures that facilitate visualization and interaction between the operators and the industrial automation systems. The human-machine interface screen templates organize the critical elements such as the device controls, process data, alarms, and Key Performance Indicators (KPIs) in the intuitive and accessible manner to ensure seamless operation within the factory settings. Optimized human-machine interface screen templates refer to the screen templates that are tailored to enhance usability, efficiency, and accuracy while minimizing the risks of operational errors. Optimization ensures that the human-machine interface (HMI) screen templates align with the best practices in screen template, cater to specific user needs, and adhere to the parameters such as tolerance levels and device constraints.

The plurality of design parameters involve the plurality of aspects of screen template that contribute to the functionality and visual layout of the human-machine interface screen templates. Examples of the plurality of design parameters include the first parameter for device controls specifying operational ranges, the second parameter for KPIs that highlight system performance metrics, the third parameter for alarms configured to indicate critical thresholds, and layout elements such as color schemes and font styles. Each design parameter plays the role in ensuring that the generated human-machine interface screen templates effectively fulfill operational and monitoring requirements.

The user prompt refers to the input provided by the operator or system designer to guide the automated generation of the human-machine interface screen templates. The user prompt may consist of specific instructions, queries, or preferences that indicate the desired features or focus areas for the screen template. For example, the user prompt could be "Generate the screen template for monitoring temperature and pressure with alarm thresholds and device control ranges." Such the prompt informs the system of the operator's requirements and serves as the foundation for extracting the plurality of design parameters.

The automation module 112 further causes the processing unit 202 to apply natural language processing (NLP) to interpret, analyze, and extract relevant information from the user prompt. NLP facilitates the conversion of human-readable instructions into structured data that can be processed by the programming system 102 to generate the human-machine interface screen templates. Examples of NLP techniques involve intent recognition to identify the goal of the operator, entity extraction to isolate specific design parameters such as KPIs or device controls, and contextual analysis to ensure that the generated screen templates align with the operator's preferences. The purpose of natural language processing is to enable seamless communication between the operator and the automated screen generation system, thereby ensuring that the human-machine interface screen templates meet the operator's requirements with precision and efficiency.

The automation module 112 further causes the processing unit 202 to categorize the extracted plurality of design parameters into the plurality of functional groups, involving the device control group, the KPI group, and the alarms group, to streamline generation of the at least one human-machine interface screen template. Categorization of the plurality of design parameters is essential for organizing the information systematically and ensuring that the generated human-machine interface screen templates are both intuitive and functionally effective. By grouping related design parameters based on their roles in industrial automation systems, the categorization process simplifies the generation of screen templates, allowing the programming system 102 to focus on the specific operational needs of each group.

Functional groups represent distinct categories within the plurality of design parameters, where each group is defined by its unique purpose in contributing to the functionality of the human-machine interface screen templates. The device control group contains design parameters associated with the manipulation and control of industrial devices. Examples of parameters within the device control group include operational ranges, tolerance levels, and control buttons, which are essential for operators to adjust device settings safely and accurately.

The Key Performance Indicator (KPI) group contains design parameters related to monitoring and evaluating the performance of industrial systems. Parameters within the KPI group include metrics such as production rate, energy consumption, and system efficiency, which serve as critical indicators for assessing the operational health of the factory. The KPI group ensures that the human-machine interface screen templates display this performance data in the manner that allows operators to make informed decisions.

The alarms group contains design parameters that are configured to alert operators to critical conditions or anomalies in the industrial system. Parameters within the alarms group include threshold values, visual indicators, and auditory signals that notify operators when predefined limits are exceeded or when faults are detected. The alarms group ensures that the human-machine interface screen templates provide timely and effective notifications to prevent operational disruptions or hazards.

By categorizing the plurality of design parameters into the device control group, the KPI group, and the alarms group, the automation module 112 further causes the processing unit 202 to ensure that the generated human-machine interface screen templates are organized, user-friendly, and tailored to address the specific functional needs of the factory environment 100.

The automation module 112 further causes the processing unit 202 to utilize graph neural networks (GNNs) to analyze and model the plurality of interdependencies between the plurality of design parameters, the plurality of key performance indicators (KPIs), and the one or more device statuses. Graph neural networks offer the powerful computational framework for analyzing and modeling complex relationships within interconnected data points. The utilization of graph neural networks involves representing the plurality of interdependencies among design parameters, key performance indicators, and device statuses as nodes and edges within the graph structure. Graph neural networks process this graph structure to uncover patterns, relationships, and dependencies that inform the generation of optimized human-machine interface screen templates.

The plurality of interdependencies refer to relationships and influences among the plurality of design parameters, key performance indicators, and device statuses that collectively determine the operational dynamics of the factory. Examples of interdependencies include the connection between device control ranges and tolerance levels, where exceeding the tolerance level impacts the corresponding key performance indicator related to system efficiency. Another example of interdependency is the relationship between alarm thresholds and device statuses, where the abnormal device status triggers the alarm to notify the operator of the potential issue. Modeling interdependencies is critical for ensuring that the human-machine interface screen templates reflect the interconnected nature of industrial operations.

Key performance indicators represent measurable metrics that evaluate the effectiveness, efficiency, and overall health of industrial processes. Examples of key performance indicators include production output, which measures the quantity of goods produced within the specified timeframe, and energy consumption, which evaluates the amount of energy used during operations. Key performance indicators provide operators with actionable insights into factory performance and are integral to the design of human-machine interface screen templates.

Device statuses represent real-time conditions and operational states of industrial devices within the factory. Examples of device statuses include temperature readings of machinery, which indicate whether equipment is operating within safe limits, and pressure levels in pipes, which signify the stability of fluid transport systems. Device statuses are critical for monitoring and maintaining the operational integrity of industrial systems and play the key role in determining the parameters displayed on human-machine interface screen templates.

The automation module 112 further causes the processing unit 202 to generate the knowledge graph comprising the plurality of interdependencies among the extracted plurality of design parameters, the plurality of key performance indicators, and the one or more device statuses. The knowledge graph is generated using graph neural networks, which are advanced machine learning algorithms specifically designed to process and analyze graph-structured data. Graph neural networks enable the representation and modeling of complex relationships by capturing dependencies and interactions between nodes and edges within the graph. The graph neural networks analyze the input data to construct the knowledge graph that accurately reflects the operational dynamics of the factory.

The knowledge graph represents the structured graphical model that organizes information in the form of nodes and edges, where nodes represent entities such as design parameters, key performance indicators, and device statuses, and edges represent the relationships or interdependencies between these entities. The knowledge graph provides the comprehensive visual and computational framework to store, analyze, and infer relationships within interconnected factory elements. In the context of human-machine interface screen generation, the knowledge graph acts as the foundational tool for understanding and utilizing the plurality of interdependencies to optimize screen templates.

The automation module 112 further causes the processing unit 202 to convert the plurality of interdependencies into the knowledge graph by analyzing the relationships between the extracted design parameters, key performance indicators, and device statuses, and mapping these relationships into edges connecting respective nodes within the graph. For example, an interdependency between a device control parameter, such as temperature settings, and a key performance indicator, such as energy efficiency, is represented as an edge connecting the node for the temperature control parameter to the node for energy efficiency. Another example of interdependency conversion is the relationship between a device status, such as pressure levels, and an alarm design parameter, where exceeding the pressure threshold triggers an alarm. This relationship is translated into the knowledge graph as an edge connecting the pressure status node to the alarm parameter node.

The automation module 112 further causes the processing unit 202 to perform feature extraction on preprocessed data derived from at least one of the plurality of key performance indicator measurements, the one or more device specifications, and the one or more tolerance levels. Preprocessed data refers to data that has undergone a series of transformations and refinements to ensure that the data is clean, consistent, and in a format suitable for further analysis and computational processing. Preprocessing may include operations such as removing noise from raw input data, normalizing values to a standard scale, handling missing data through interpolation or imputation, and structuring the data into formats that align with the requirements of feature extraction algorithms. For example, raw temperature readings from machinery may be cleaned to remove outliers and normalized to fit within predefined operational ranges before being categorized as preprocessed data.

Feature extraction is performed using machine learning algorithms designed to identify and isolate meaningful attributes or characteristics from the preprocessed data, which are essential for understanding patterns and relationships within the data. Machine learning algorithms used for feature extraction are trained using labeled training data that corresponds to historical measurements, device specifications, tolerance ranges, and predefined operational states. The training data is typically derived from historical factory operations, simulation data, or domain-specific benchmarks. For example, a machine learning model may be trained on datasets containing variations in energy consumption patterns under different production rates, device tolerance levels under normal and stress conditions, and alarm trigger thresholds for specific machinery failures.

The inputs to the machine learning algorithms consist of preprocessed data representing the plurality of key performance indicator measurements, the one or more device specifications, and the one or more tolerance levels. For instance, inputs may include normalized values of KPIs such as production output, device characteristics such as operating temperature ranges, and tolerance values such as acceptable pressure deviations. The machine learning algorithms process these inputs to identify correlations, anomalies, and key attributes relevant to the feature extraction process.

The outputs generated by the machine learning algorithms consist of extracted features that represent the most significant attributes contributing to the operational dynamics of the factory. Examples of outputs include dimensional reductions that isolate the principal components of energy consumption trends, spatial features that identify vibration patterns in machinery, and statistical thresholds that categorize alarm trigger conditions. These outputs are structured as feature sets, which serve as the basis for further analysis and modeling.

The automation module 112 further causes the processing unit 202 to use the outputs of the machine learning algorithms in the feature extraction process to isolate attributes that are directly relevant to the generation of optimized human-machine interface screen templates. For example, extracted features related to KPIs such as production rate and energy efficiency may inform the visualization elements of the screen templates, while features derived from device specifications such as operating ranges may guide the layout and functionality of control elements.

The automation module 112 further causes the processing unit 202 to identify one or more historical user preferences and one or more common design patterns from existing human-machine interface screen templates. Historical user preferences refer to patterns, tendencies, or choices made by users when interacting with human-machine interface screen templates in previous scenarios. Examples of historical user preferences include the frequent placement of control buttons on the right-hand side of the screen for ease of access or the repeated use of color coding, such as green for normal operation and red for alarms, to enhance quick visual recognition. Historical user preferences are typically derived from user behavior data, feedback logs, and interaction histories collected from human-machine interface systems deployed in factory environments.

Common design patterns refer to recurring structural or stylistic elements in human-machine interface screen templates that are widely adopted due to their effectiveness and usability. Examples of common design patterns include the use of tabbed navigation menus to organize different sections of the interface, the inclusion of summary dashboards to display aggregated key performance indicators at a glance, and the use of graphical representations such as bar charts or line graphs for visualizing trends in device statuses. Common design patterns emerge from industry standards, best practices, and design conventions that have been validated through repeated use in industrial settings.

Historical user preferences and common design patterns are identified using machine learning algorithms designed to analyze existing human-machine interface screen templates and extract meaningful insights. Algorithms such as clustering techniques, which group similar design elements based on user interaction data, and natural language processing models, which process textual feedback associated with screen template usage, are employed to identify patterns and preferences. For instance, clustering algorithms may identify that users consistently interact with navigation menus positioned at the top of the screen, while natural language processing models may detect user feedback indicating a preference for larger font sizes in alarm notifications.

The automation module 112 further causes the processing unit 202 to receive existing human-machine interface screen templates from a variety of sources, including previously deployed factory systems, design archives maintained by industrial automation companies, and repositories containing templates standardized for specific industries. These existing human-machine interface screen templates serve as the input data for the identification process, providing the historical context and design examples needed to extract user preferences and design patterns. For example, templates used in factories specializing in chemical processing may be analyzed to identify preferences for multi-layered dashboards that display device statuses and tolerance levels simultaneously.

The automation module 112 further causes the processing unit 202 to extract historical design data from the features, the identified historical user preferences, and the common design patterns. Historical design data refers to archived or previously implemented design elements, configurations, and structures that have been utilized in human-machine interface screen templates over time. Historical design data encapsulates the accumulated design knowledge and practices that have proven effective in industrial settings and are stored in formats suitable for analysis and reuse in new screen template generation.

Examples of historical design data include specific layout configurations such as grid-based arrangements for organizing control buttons, proportional spacing between visual elements to ensure clarity, and standard placement of navigation menus at the top of the screen. Additional examples include color schemes used to visually distinguish device statuses, such as green for operational devices, yellow for devices nearing tolerance limits, and red for malfunctioning devices. Historical design data may also include font types and sizes frequently used in alarm notifications to ensure readability during critical operations or the consistent use of icons and graphical symbols to represent devices and key performance indicators.

The automation module 112 further causes the processing unit 202 to analyze the historical design data by employing machine learning algorithms such as pattern recognition models and rule-based systems. These algorithms identify recurrent design elements within the extracted features and correlate them with historical user preferences and common design patterns. For instance, pattern recognition models may detect recurring structures in screen templates, such as dashboards with clustered key performance indicators, while rule-based systems may codify best practices, such as maintaining a minimum contrast ratio between text and background colors for optimal readability.

The automation module 112 further causes the processing unit 202 to leverage the interplay between the features, historical user preferences, and common design patterns to isolate design elements that are both functionally effective and user-friendly. For example, if the extracted features indicate frequent user interactions with control buttons positioned at the lower right corner of a screen template, and historical user preferences confirm this trend, the machine learning algorithms extract this design element as part of the historical design data. Similarly, if common design patterns indicate that graphical representations such as pie charts are widely used for visualizing energy consumption metrics, the machine learning algorithms incorporate this insight into the historical design data.

The automation module 112 further causes the processing unit 202 to extract the plurality of design guidelines from the knowledge graph by applying a supervised learning algorithm to the historical design data and the plurality of design parameters. Design guidelines refer to structured rules, principles, or recommendations that dictate the optimal arrangement, visualization, and interaction elements within human-machine interface screen templates to ensure usability, efficiency, and compliance with operational requirements. Design guidelines serve as actionable directives that inform how screen elements such as control buttons, dashboards, notifications, and device indicators should be organized and presented to operators.

Examples of design guidelines include principles such as maintaining a minimum spacing between interactive elements to prevent accidental activation, ensuring critical alarms are displayed prominently in red with bold fonts for immediate visibility, and positioning frequently used controls in locations that minimize operator hand movement. Other examples include recommendations for color schemes, such as avoiding combinations that may cause visual strain, and guidelines for visual hierarchy, such as placing summary dashboards at the top of the screen for quick access to aggregated information. Design guidelines also include rules for device-specific customizations, such as using graphical indicators for temperature levels in heat-sensitive machinery or providing slider controls for adjustable tolerance ranges.

The supervised learning algorithm employed for extracting the plurality of design guidelines is trained using labeled training data that consists of historical design data, the plurality of design parameters, and known guidelines from industry standards or expert inputs. The training data includes examples where screen templates are annotated with corresponding design guidelines, such as labels indicating the preferred placement of control buttons, recommended font sizes for device statuses, or acceptable ranges of color combinations for visual clarity. For instance, a training dataset may include screen templates used in chemical processing factories, annotated with guidelines for displaying temperature thresholds prominently due to their criticality.

The automation module 112 further causes the processing unit 202 to analyze inputs to the supervised learning algorithm, including relationships between design parameters in the knowledge graph, extracted features such as recurring placement patterns for navigation menus, and historical data indicating user preferences for graphical dashboards. The algorithm detects correlations, dependencies, and trends that align with existing design guidelines.

The outputs generated by the supervised learning algorithm consist of extracted design guidelines that provide actionable insights for creating optimized screen templates. For instance, the outputs may include a rule stating that navigation menus should be positioned at the top of the screen for enhanced accessibility or a guideline recommending the use of contrasting colors for displaying key performance indicators to ensure clarity. The outputs also capture device-specific guidelines, such as instructions for displaying tolerance levels alongside pressure readings in machinery prone to overloading.

The automation module 112 further causes the processing unit 202 to transmit a prompt to the large language model to generate at least one human-machine interface screen template, wherein the transmitted prompt comprises information indicative of the plurality of design guidelines. The prompt includes additional contextual information, such as operator skill level and factory layout, to tailor the generated screen template to specific user needs.

The automation module 112 further causes the processing unit 202 to generate the prompt using a prompt template selected from a large number of pre-defined templates based on criteria that align with the requirements of human-machine interface screen template generation. The criteria include compatibility with the plurality of design guidelines, relevance to factory-specific parameters, and suitability for addressing user-specific needs such as operator skill level and factory layout. For example, if the factory layout includes multiple zones with distinct operational roles, the automation module 112 selects the prompt template designed to accommodate zone-specific design considerations. Similarly, if the operator skill level is novice, the automation module 112 selects the prompt template structured to emphasize simplicity and clarity in the generated screen templates.

The automation module 112 further causes the processing unit 202 to fill the selected prompt template with specific information required to generate the prompt. The plurality of design guidelines are integrated into the selected prompt template to ensure that the generated screen templates adhere to established principles and rules. For example, the selected prompt template may include placeholders for layout rules, color scheme preferences, and interaction principles derived from the plurality of design guidelines. The automation module 112 ensures these placeholders are filled with specific guidelines, such as recommendations for placing control buttons in accessible areas or using bold red fonts for alarm notifications.

The automation module 112 further causes the processing unit 202 to incorporate additional contextual information, such as operator skill level or factory layout, into the selected prompt template. For example, if the operator skill level is novice, the automation module 112 integrates contextual information suggesting simplified navigation structures and prominent visual cues for key performance indicators. Similarly, if the factory layout includes multiple zones, the automation module 112 integrates contextual information such as the spatial arrangement of devices or the interdependencies between different zones, ensuring that the generated screen templates reflect the operational structure of the factory.

The automation module 112 further causes the processing unit 202 to deploy the generated human-machine interface screen template into the industrial automation system to improve operator responsiveness. The deployed screen template is validated against the industrial automation system's software requirements and device compatibility. Validation ensures that graphical elements render correctly on display devices and interactive components respond to input commands effectively. The deployment process includes mapping the interactive elements, such as control buttons and sliders, to corresponding devices and sensors in the factory, followed by loading the screen template onto operator consoles or control panels.

By deploying the human-machine interface screen template into the industrial automation system, the automation module 112 further causes the processing unit 202 to enhance operator responsiveness through intuitive visualization and interactive controls. For example, graphical dashboards displaying aggregated KPIs allow operators to monitor trends and take corrective actions, such as adjusting machine speeds or reallocating resources, to maintain optimal performance.

The automation module 112 further causes the processing unit 202 to automatically suggest a plurality of layout modifications, color schemes, and font styles for the generated human-machine interface screen template based on usability metrics. Suggestions are generated through the application of a machine learning algorithm trained to analyze usability metrics, historical design data, and contextual information associated with the generated screen template. The machine learning algorithm evaluates the usability of the screen template according to predefined criteria and outputs actionable recommendations for improving the design.

For example, the machine learning algorithm may suggest layout modifications, such as repositioning control buttons to more accessible areas of the screen based on historical user preferences. If usability metrics indicate that operators frequently miss alarms located in the top-left corner of the screen, the machine learning algorithm may suggest relocating alarms to the center of the screen to ensure higher visibility. Similarly, the machine learning algorithm may recommend adjustments to color schemes, such as replacing low-contrast combinations with higher-contrast alternatives to enhance readability. For instance, the algorithm may suggest using white text on a dark blue background for status indicators instead of gray text on a light background. Font style suggestions may include recommendations such as switching to sans-serif fonts for improved readability or increasing font sizes for critical information like alarm notifications.

The automation module 112 further causes the processing unit 202 to use several inputs to generate the suggestions. These inputs include the initial human-machine interface screen template received from the large language model, historical design data capturing user interaction trends and preferences, and contextual information such as operator skill level and factory layout. Additionally, the machine learning algorithm evaluates usability metrics derived from the assessment of the screen template's effectiveness and user-friendliness. For example, usability metrics may include measures such as the average time taken by operators to locate specific controls, the frequency of errors in activating interactive elements, and the clarity of visual information displayed on the screen.

The outputs generated by the machine learning algorithm consist of a plurality of actionable recommendations for layout modifications, color schemes, and font styles. These suggestions are structured as specific improvements that can be applied to the human-machine interface screen template. For instance, the outputs may specify that navigation menus should be repositioned to the top-center of the screen, propose the use of a green background for normal operation indicators, and recommend a bold font style for alarm messages. The algorithm outputs these recommendations in a format that can be directly applied or further refined during the screen template customization process.

The automation module 112 further causes the processing unit 202 to calculate usability metrics, which refer to quantitative and qualitative measures that evaluate the effectiveness, efficiency, and satisfaction associated with using the human-machine interface screen template. Usability metrics are calculated using data collected from simulated interactions, operator feedback, and analysis of historical user behavior. For example, the calculation of usability metrics may involve conducting simulations where operators perform specific tasks using the screen template, such as activating controls or responding to alarms, and measuring the time taken to complete those tasks. Usability metrics may also involve analyzing error rates, such as the frequency of accidental activations of controls or missed alarms.

The automation module 112 further causes the processing unit 202 to incorporate factors such as visual clarity, layout accessibility, and interaction intuitiveness into the calculation of usability metrics. For example, visual clarity may be assessed by analyzing the contrast ratios between text and background colors, while layout accessibility may be evaluated by measuring the proximity of frequently used controls to the operator's field of view. Interaction intuitiveness may be calculated by analyzing how quickly and accurately operators can navigate through the screen template to access desired functionalities. By generating suggestions based on usability metrics, the automation module 112 ensures that the human-machine interface screen template aligns with operator needs and enhances operational efficiency in the factory environment 100.

The automation module 112 further causes the processing unit 202 to detect operator feedback associated with interactions with the generated human-machine interface screen template. Detecting operator feedback involves observing, capturing, and analyzing the responses, behaviors, and inputs provided by operators while they use the screen template. Operator feedback offers valuable insights into the usability, effectiveness, and user satisfaction of the screen template, enabling improvements and refinements to better meet operator needs and enhance operational efficiency.

Operator feedback is detected through mechanisms integrated into the human-machine interface screen template and the industrial automation system. For example, the screen template may include logging systems that record operator actions, such as the frequency of activating specific control buttons or the sequence of navigation through menu options. If an operator repeatedly interacts with a particular control button, the feedback indicates its frequent use and potential importance, suggesting that the layout of the button should prioritize accessibility. Conversely, if certain interactive elements are rarely used, operator feedback may suggest redesigning or reassigning those elements to optimize screen space.

Operator feedback is also detected through direct input mechanisms, such as surveys or rating systems embedded within the screen template. For instance, after completing a task, operators may be prompted to rate their experience on a scale of one to five or provide comments on the clarity of instructions displayed on the screen. If operators consistently rate a navigation menu as difficult to use, the feedback highlights an area requiring improvement in terms of layout or labeling.

Additionally, operator feedback is detected through physiological and behavioral observations using advanced sensors integrated into the industrial automation system. For example, eye-tracking sensors detect where operators focus their attention on the screen template, providing feedback on which areas are visually prominent and which areas may be overlooked. If eye-tracking data shows that operators rarely glance at a warning indicator located in the bottom-left corner of the screen, the feedback suggests repositioning the indicator to a more central location for improved visibility.

Another example of operator feedback is detected through error logs. If operators frequently activate incorrect controls or fail to respond to alarms in a timely manner, the feedback reveals potential issues with the screen template's layout, color schemes, or interaction design. For instance, if operators accidentally activate a shutdown button due to its close proximity to a frequently used control, the feedback indicates a need for increased spacing or repositioning to prevent errors.

The automation module 112 further causes the processing unit 202 to analyze operator feedback associated with interactions to continuously refine the human-machine interface screen template based on detected usability challenges. By leveraging operator feedback, the automation module 112 ensures that the screen template evolves in alignment with operator preferences, operational requirements, and industrial standards, resulting in a more efficient and user-friendly interface.

The automation module 112 further causes the processing unit 202 to update the machine learning model based on the detected operator feedback. Updating the machine learning model involves modifying its parameters, retraining its architecture, or augmenting its training data to incorporate insights derived from operator feedback. The process ensures that the machine learning model evolves to reflect real-world usage patterns, operator preferences, and usability challenges, thereby improving its ability to generate future human-machine interface screen templates that align with operational requirements and user needs.

Operator feedback serves as the crucial input for updating the machine learning model. For example, if operator feedback indicates frequent difficulty in locating specific interactive elements on the screen template, the machine learning model is updated to prioritize layout templates that place critical controls in highly visible and accessible areas. The feedback may include data such as error logs showing repeated activation of incorrect controls, eye-tracking information indicating overlooked regions of the screen, or survey results highlighting dissatisfaction with navigation complexity. This feedback is analyzed and transformed into actionable insights that guide the modification of the machine learning model.

The automation module 112 further causes the processing unit 202 to extract features from operator feedback, which serve as the basis for updating the machine learning model. For example, if operators consistently rate certain font styles as difficult to read, the feature extraction process identifies font-related usability metrics, such as font size, contrast ratio, and style preferences. These features are added to the training data used by the machine learning model, enabling it to learn patterns that align with operator preferences. The training data may also be augmented with additional examples reflecting the detected feedback, such as annotated screen templates showcasing improved layouts, color schemes, or interaction templates based on operator input.

The automation module 112 further causes the processing unit 202 to retrain the machine learning model using the augmented training data to incorporate insights derived from operator feedback. During retraining, the machine learning model adjusts its weights, biases, and decision-making algorithms to optimize its ability to generate human-machine interface screen templates that address identified usability challenges. For example, if operator feedback highlights the need for simplified navigation structures for novice users, the retraining process ensures that the machine learning model learns to prioritize screen templates with streamlined menus and intuitive labeling.

The updating process may also involve fine-tuning the machine learning model to improve its accuracy and adaptability without requiring full retraining. Fine-tuning involves applying minor adjustments to the model's parameters based on specific operator feedback. For instance, if feedback indicates that alarm indicators should consistently use bold red fonts, the machine learning model is fine-tuned to incorporate this design guideline into its future outputs.

The updated machine learning model generates improved human-machine interface screen templates that better align with operator needs and enhance usability. For example, based on updated insights, the machine learning model may suggest relocating frequently used controls to central areas of the screen or recommending high-contrast color schemes for critical information. The updated model continuously incorporates operator feedback into its decision-making process, ensuring that its outputs evolve over time to reflect changing user requirements and operational conditions.

The automation module 112 further causes the processing unit 202 to modify the generated human-machine interface screen template using the updated machine learning model to enhance usability for the operator. Modifying the screen template involves applying the updated insights, recommendations, and design principles learned by the machine learning model to refine the structure, visual elements, and interactive components of the screen template. The modification process ensures that the screen template aligns with operator preferences, operational requirements, and usability standards derived from operator feedback.

The modification process begins with analyzing the outputs of the updated machine learning model to identify specific areas of improvement in the human-machine interface screen template. For example, if the updated machine learning model highlights the need for improved visibility of critical alerts, the modification process involves enhancing the color schemes and font styles of alert indicators. The automation module 112 modifies the screen template by replacing low-contrast color schemes with high-contrast alternatives, such as using bright red backgrounds for alarms with bold white fonts for alert messages.

The automation module 112 further causes the processing unit 202 to apply layout modifications suggested by the updated machine learning model to optimize the arrangement of interactive elements on the screen template. For example, if the updated machine learning model recommends repositioning frequently used controls closer to the operator's field of view, the modification process involves relocating such controls to central areas of the screen. The automation module 112 ensures that the modified layout enhances accessibility and reduces the time taken by operators to locate and activate controls.

The modification process incorporates usability-focused adjustments to interactive elements such as sliders, buttons, and input fields. For instance, if the updated machine learning model suggests increasing the size of control buttons to accommodate operators using touch interfaces, the automation module 112 modifies the screen template by resizing the buttons and ensuring adequate spacing between interactive elements. Similarly, if the machine learning model recommends introducing tooltips for novice operators, the modification process involves embedding descriptive labels or instructions that appear when the operator hovers over or clicks on specific controls.

The automation module 112 further causes the processing unit 202 to refine navigation pathways based on recommendations from the updated machine learning model. For example, if the updated machine learning model identifies inefficiencies in navigating between different screens, the modification process introduces shortcuts, streamlined transitions, or breadcrumb navigation elements. These modifications ensure that operators can seamlessly access desired functionalities without encountering unnecessary delays or confusion.

The modification process integrates improvements to visual aesthetics to enhance operator engagement and satisfaction. For example, if the updated machine learning model suggests color schemes that align with ergonomic principles, the automation module 112 modifies the screen template by implementing calming colors for background elements and vibrant colors for actionable controls. The automation module 112 ensures that all visual adjustments adhere to usability guidelines while maintaining consistency in design.

The automation module 112 further causes the processing unit 202 to apply reinforcement learning to iteratively improve the machine learning model based on operational feedback and evolving factory requirements. Applying reinforcement learning involves training the machine learning model through a continuous cycle of trial, evaluation, and adjustment, where the machine learning model learns optimal behaviors and design strategies for generating human-machine interface screen templates. The reinforcement learning process uses operational feedback as a reward signal to guide the machine learning model's learning process and adapts to evolving factory requirements by incorporating dynamic data from real-world industrial environments.

The reinforcement learning process begins by defining objectives that align with usability goals and operational efficiency. For example, the reinforcement learning algorithm may aim to maximize operator satisfaction, minimize response times to alarms, or optimize task completion rates using the human-machine interface screen template. The reinforcement learning algorithm assigns reward values to actions taken by the machine learning model based on how well those actions achieve the defined objectives. For instance, if the machine learning model generates a screen template that reduces the average time operators take to locate control buttons, the reinforcement learning algorithm assigns a high reward value to the corresponding design parameters.

Operational feedback serves as the primary input for the reinforcement learning algorithm during the iterative improvement process. Operational feedback includes data such as operator interaction logs, error rates, task completion times, and system performance metrics. For example, if operators frequently fail to respond to alarms due to low visibility, operational feedback highlights the need for design modifications, such as increasing the prominence of alarm indicators. The reinforcement learning algorithm uses the operational feedback to evaluate the effectiveness of design choices made by the machine learning model and adjusts its parameters to improve future outputs.

The automation module 112 further causes the processing unit 202 to adapt the machine learning model iteratively to evolving factory requirements. Factory requirements may include changes in production workflows, the introduction of new machinery, or variations in operator skill levels. For instance, if a factory introduces a new set of sensors requiring additional monitoring controls, the reinforcement learning algorithm incorporates the new requirements into the machine learning model's training process, ensuring that future screen templates accommodate the added functionalities. The algorithm continuously adapts to changes in the factory environment 100, ensuring that the machine learning model remains relevant and effective over time.

The automation module 112 further causes the processing unit 202 to analyze operator interaction patterns with the human-machine interface screen template to identify areas for usability improvement. Analyzing operator interaction patterns involves capturing and evaluating data related to how operators engage with the interactive elements of the screen template during factory operations. The analysis process identifies trends, inefficiencies, and challenges in operator behavior, enabling targeted modifications to enhance usability.

Operator interaction patterns are captured using logging mechanisms embedded within the screen template and the industrial automation system. For example, the analysis may reveal that operators frequently navigate through multiple screens to access critical controls, indicating the need for streamlined navigation pathways. Interaction patterns such as repeated activation of specific buttons, prolonged pauses in decision-making, or frequent errors in completing tasks are evaluated to uncover usability challenges. For instance, if operators consistently activate incorrect controls due to unclear labeling, the analysis process identifies the need for improved label design or repositioning of the controls.

The automation module 112 further causes the processing unit 202 to use statistical and machine learning techniques to identify correlations and causal relationships within operator interaction patterns. For example, data showing high error rates in certain tasks may be correlated with low visibility of relevant controls on the screen template. The analysis process identifies actionable insights, such as modifying the layout to place critical controls in more accessible locations or introducing instructional tooltips to guide operators in completing tasks.

By analyzing operator interaction patterns with the human-machine interface screen template, the automation module 112 ensures that usability improvements are data-driven and aligned with real-world operational needs. Combined with reinforcement learning, the iterative improvement process continuously refines the machine learning model and the human-machine interface screen template, enhancing operator responsiveness and overall factory performance.

The automation module 112 further causes the processing unit 202 to implement iterative refinement strategies to ensure the human-machine interface screen template evolves based on dynamic factory conditions and operator behaviors. The iterative refinement process involves integrating newly identified usability insights, operational feedback, and evolving factory requirements into both the machine learning model and the screen template design. This continuous cycle of improvement enhances the adaptability and effectiveness of the system over time.

The automation module 112 further causes the processing unit 202 to evaluate the deployed human-machine interface screen template within real-world operational settings to monitor its performance and effectiveness. Real-world evaluations involve capturing detailed data on operator interactions, task completion rates, error frequencies, and system responsiveness during live factory operations. For example, the automation module 112 may monitor how quickly operators respond to alarms using the screen template or how efficiently they adjust device settings during production. Metrics such as average task completion time, operator satisfaction ratings, and the frequency of system overrides are analyzed to assess whether the screen template meets its intended usability and operational goals.

The automation module 112 further causes the processing unit 202 to detect areas of improvement during live evaluations by analyzing deviations between expected and actual operator performance. For instance, if operators take longer than anticipated to locate certain controls, this indicates a need for layout adjustments or enhanced visual cues. Similarly, if alarms are frequently ignored or missed, the screen template may require modifications to improve the prominence and accessibility of alert indicators. This real-time evaluation process ensures the system remains responsive to operational challenges and continuously adapts to factory conditions.

The automation module 112 further causes the processing unit 202 to integrate operational data collected during live evaluations into the machine learning model to refine its design recommendations. The operational data serves as an invaluable input for retraining and fine-tuning the machine learning model, enabling it to learn from real-world scenarios and generate more effective screen templates in future iterations. For example, data showing frequent operator errors in activating controls may prompt the machine learning model to prioritize screen templates with enhanced labeling and larger interactive elements.

The automation module 112 further causes the processing unit 202 to generate updated human-machine interface screen templates based on the refined outputs of the machine learning model. These updated templates incorporate the latest usability insights, design optimizations, and operator feedback to address previously detected challenges. For instance, updated templates may feature redesigned navigation menus for faster access to critical controls, improved alarm systems with bold visual indicators, or reorganized dashboards that display aggregated KPIs more intuitively.

The automation module 112 further causes the processing unit 202 to redeploy the updated human-machine interface screen templates into the industrial automation system. Redeployment involves validating the updated templates to ensure compatibility with factory hardware and software requirements, followed by replacing or enhancing existing screen templates across operator consoles and control panels. For example, the updated screen template may be loaded onto touch-screen interfaces used by production line operators or supervisory control terminals utilized by factory managers. The redeployment process ensures operators have access to the latest interface templates optimized for usability and efficiency.

The automation module 112 further causes the processing unit 202 to continuously monitor the performance of redeployed screen templates to validate their effectiveness and inform further refinements. Monitoring involves collecting data on operator interactions, system responsiveness, and factory performance metrics to assess whether the updated templates achieve the desired operational goals. For instance, if the updated screen template reduces average response times to alarms or enhances operator satisfaction ratings, this confirms the success of the implemented changes. Conversely, if new usability challenges arise, the automation module 112 initiates additional refinement cycles to address these issues.

The automation module 112 further causes the processing unit 202 to apply reinforcement learning to incorporate long-term trends and evolving factory requirements into the machine learning model. Reinforcement learning algorithms analyze operational data collected over extended periods to identify recurring patterns, emerging challenges, and opportunities for further optimization. For example, if long-term data reveals increasing complexity in production workflows, the machine learning model adapts to generate screen templates with advanced organizational structures, such as multi-layered dashboards or specialized navigation pathways for different factory zones.

The automation module 112 further causes the processing unit 202 to integrate evolving factory requirements into the machine learning model by continuously updating training datasets with new operational insights, device specifications, and industry standards. For instance, the introduction of new machinery requiring additional monitoring controls or updated regulatory guidelines for factory operations prompts the machine learning model to incorporate these changes into its design logic. This ensures future screen templates remain compatible with the latest factory configurations and adhere to industry best practices.

The automation module 112 further causes the processing unit 202 to maintain a feedback loop between the machine learning model and the industrial automation system to ensure ongoing adaptability. The feedback loop enables the machine learning model to learn from every iteration of screen template deployment and refinement, creating a self-improving system capable of responding to dynamic factory conditions. For example, data from operator interactions with updated templates informs the machine learning model about successful design strategies, which are reinforced in subsequent outputs. Similarly, new usability challenges detected during live operations prompt the machine learning model to adjust its design recommendations accordingly.

By implementing iterative refinement strategies, deploying updated screen templates, and leveraging reinforcement learning, the automation module 112 ensures the human-machine interface screen templates evolve continuously to meet operator needs and factory requirements. This approach enhances operational efficiency, reduces usability challenges, and ensures the industrial automation system remains adaptive and effective over time.

FIG. 3 is a block diagram of an automation module 112, such as those shown in FIG. 2, in which an embodiment of the present invention can be implemented. In FIG. 3, the automation module 112 comprises a request handler 302, a parameter extraction module 304, a dependency analysis module 306, a natural language processing (NLP) module 308, a knowledge graph database 310, a validation and simulation module 312, and a deployment module 314. FIG. 3 is explained in conjunction with FIG. 1 and FIG. 2.

The request handler 302 is configured for receiving a request to initiate the automated generation or refinement of human-machine interface screen templates for the factory environment 100. For example, the request may be received from one of the one or more operators or factory supervisors via the network 104. In an alternative embodiment, the request may be triggered automatically by the industrial automation system based on detected changes in factory configurations or device statuses. An example could be a factory manager requesting a screen redesign to accommodate new machinery or an automated request triggered by a system upgrade.

The parameter extraction module 304 is configured for identifying and extracting the plurality of design parameters, device statuses, and key performance indicators (KPIs) from factory data sources, such as the one or more devices 108A-N. For example, the parameter extraction module 304 may recognize a temperature control parameter and extract its operational range and current status.

The dependency analysis module 306 is configured for analyzing the extracted design parameters, device statuses, and KPls to determine the interdependencies and correlations among these elements. For instance, the dependency analysis module 306 is enabled to map the relationship between a device control parameter, such as speed, and a KPI, such as production rate. An alternative embodiment may involve using graph neural networks or other machine learning algorithms to enhance the accuracy of the dependency analysis.

The natural language processing (NLP) module 308 is configured for extracting and interpreting contextual information from operator preferences, historical design data, and industry standards. An example would be extracting textual descriptions of operator feedback or interpreting design guidelines associated with alarm visualization.

The knowledge graph database 310 is configured for storing the plurality of interdependencies among the extracted design parameters, device statuses, and KPls. For example, the knowledge graph database 310 may store relationships between device control settings and their impact on energy consumption efficiency. In an alternative embodiment, the database could be integrated with distributed cloud systems for scalable and collaborative data management across factory zones.

The validation and simulation module 312 is configured to generate simulation instances for the proposed human-machine interface screen templates and simulate operator interactions in a virtual environment. For example, the validation and simulation module 312 might simulate operators responding to alarms or adjusting device settings based on visual elements in the screen template. In an alternative embodiment, the simulation could include stress testing scenarios, such as evaluating operator performance during high-pressure operational conditions.

The deployment module 314 is configured for deploying the generated screen templates and executing them in the actual factory environment 100. For instance, the deployment module 314 automates the process of integrating the screen templates into operator consoles, testing their compatibility with factory devices, and validating their functionality under real-world conditions.

The automation module 112 for automating the generation and optimization of human-machine interface (HMI) screen templates offer numerous advantages by leveraging advanced computational techniques and adaptive technologies. One major advantage is an ability to dynamically tailor HMI screen templates to operator needs and industrial requirements in real-time. This is achieved through the parameter extraction module (304), which identifies key design parameters, device statuses, and key performance indicators (KPIs), and the knowledge graph database (310), which models interdependencies among these elements using advanced correlation algorithms. Furthermore, the validation and simulation module (312) enhances usability by simulating operator interactions with the proposed HMI screen templates, ensuring functional alignment with operational goals before deployment.

Another advantage is the system's ability to adapt to changes within the factory environment 100, such as new machinery or updated operator preferences. This adaptability is achieved through real-time updates to the generated screen templates based on new data, facilitated by the automation module (112), which continuously processes screenshots and operator feedback. The machine learning model and reinforcement learning techniques further refine the templates over time, enabling long-term optimization by learning from operator interaction patterns and feedback, ensuring usability improvements. Additionally, the system's deployment module (314) streamlines the integration of validated HMI screen templates into factory environments, ensuring compatibility with operator consoles and control panels.

The system 102 also provides improved efficiency and accuracy in design generation by automating processes that traditionally require manual intervention. The use of graph neural networks in the creation of the knowledge graph allows highly accurate modeling of interdependencies, while the natural language processing (NLP) module (308) extracts contextual information from prompts and design guidelines to ensure alignment with operator needs. By suggesting layout modifications, color schemes, and font styles based on usability metrics, the system further ensures that the HMI screen templates are intuitive and operator-friendly, reducing cognitive load and improving responsiveness during high-pressure scenarios.

Finally, the system achieves continuous improvement through its feedback loop, where the validation and simulation module (312) detects operator feedback, and the machine learning model is updated accordingly. This feedback loop enables iterative refinement of screen templates, ensuring that the designs evolve to meet changing factory requirements and operator preferences. The combination of advanced image processing, NLP, machine learning, and reinforcement learning provides a robust, scalable, and adaptive solution for optimizing HMI screen templates in industrial automation systems. By leveraging these modules and features, the disclosed system and method achieve significant improvements in usability, adaptability, efficiency, and operator responsiveness, addressing the challenges of factory environments with precision and reliability.

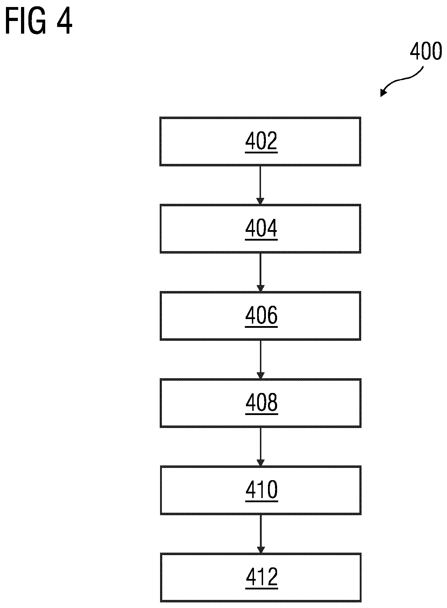

FIG. 4 is a process flowchart illustrating an exemplary method for automating the generation and validation of human-machine interface screen templates, according to an embodiment of the present disclosure.

At step 402, one or more design parameters, device statuses, and key performance indicators (KPIs) associated with the factory environment 100 are identified by applying a data extraction algorithm to input data collected from the one or more devices 108A-N and sensors. The design parameters, device statuses, and KPls represent operational metrics and controls relevant to the factory processes.

At step 404, using a correlation algorithm, interdependencies are established between the identified design parameters, device statuses, and KPIs. The interdependencies are represented as edges connecting nodes in a knowledge graph. For example, the correlation algorithm may identify a relationship between a temperature control parameter and the energy efficiency KPI.

At step 406, potential ambiguities associated with the established interdependencies are determined based on an analysis of the knowledge graph, operator preferences, and historical design data. For instance, semantic ambiguities may arise if multiple temperature thresholds are associated with conflicting alarm settings.

At step 408, a prompt is transmitted to a large language model to generate context information for resolving the detected ambiguities. The large language model is trained on domain-specific data, such as industry standards for factory automation and operator interaction guidelines. For example, the prompt may request clarification on the most effective alarm visualization format for temperature threshold violations.

At step 410, one or more optimized human-machine interface screen templates are generated based on the established interdependencies and the context information provided by the large language model. The generated templates are tailored to operator preferences, device specifications, and usability guidelines. For instance, the screen templates may feature dashboards displaying aggregated KPIs and interactive controls for adjusting device settings.

At step 412, the generated human-machine interface screen templates are validated and deployed in the factory environment 100. Validation comprises simulating operator interactions to ensure usability and functionality, while deployment involves integrating the screen templates into operator consoles and control panels. The deployed templates are tested for compatibility with factory devices and operational requirements, and a usability report is generated to highlight areas for further refinement.

The present invention can take a form of a computer program product comprising program modules accessible from computer-usable or computer-readable medium storing pro-gram code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in meth-od claims may also be apply to system/apparatus claims.

### List of references

1. 1**100** - Factory Environment
2. **102** - Programming System
3. **104** - Network (e.g., LAN, WAN, Wi-Fi, Internet)
4. **106** - User Interface
5. **108A-N** - Screen Elements (e.g., device controls, alarm indicators, dashboards)
6. **110** - Platform (e.g., Cloud Computing Platform)
7. **112** - Automation Module
8. **114** - Server
9. **116** - Network Interface
10. **118** - Database
11. **120A-N** - Client Devices (e.g., desktop computers, laptops, tablets, smartphones)
12. **122A-N** - Design Tool
13. **202** - Processing Unit
14. **204** - Memory
15. **206** - Storage Unit
16. **208** - Communication Interface
17. **210** - Input-Output Unit (e.g., touchscreens, keyboards)
18. **212** - Network Interface
19. **214** - Bus
20. **302** - Request Handler
21. **304** - Parameter Extraction Module
22. **306** - Dependency Analysis Module
23. **308** - Natural Language Processing (NLP) Module
24. **310** - Knowledge Graph Database
25. **312** - Validation and Simulation Module
26. **314** - Deployment Module
27. **402** - Identification of Design Parameters, Device Statuses, and KPIs
28. **404** - Establishing Interdependencies via Correlation Algorithm
29. **406** - Determination of Potential Ambiguities
30. **408** - Transmitting Prompt to Large Language Model
31. **410** - Generation of Optimized HMI Screen Templates
32. **412** - Validation and Deployment of Generated HMI Screen Templates

## Claims

1. A method for automatically generating optimized human-machine interface (HMI) screen templates, the method comprising:
extracting a plurality of design parameters from a user prompt using natural language processing (NLP);
generating a knowledge graph comprising a plurality of interdependencies among the extracted plurality of design parameters, a plurality of key performance indicators (KPIs), and real-time device statuses;
extracting a plurality of design guidelines from the knowledge graph by application of a supervised learning algorithm on historical design data and the plurality of design parameters;
transmitting a prompt to a large language model to generate at least one HMI screen template, wherein the transmitted prompt comprises information indicative of the plurality of design guidelines; and
deploying the generated at least one HMI screen template into an industrial automation system to improve operator responsiveness.

2. The method according to claim 1, wherein generating the knowledge graph further comprises:
utilizing graph neural networks (GNNs) to analyze and model the plurality of interdependencies between the plurality of design parameters, the plurality of key performance indicators (KPIs), and device statuses.

3. The method according to any of the preceding claims, further comprising:
categorizing the extracted plurality of design parameters into functional groups, such as device controls, KPIs, and alarms, to streamline generation of the at least one HMI screen template.

4. The method according to any of the preceding claims, wherein extracting the plurality of design guidelines further comprises:
performing feature extraction on preprocessed data derived from at least one of the plurality of key performance indicator measurements, device specifications, and tolerance levels.

5. The method according to any of the preceding claims, wherein extracting the plurality of design guidelines further comprises:
identifying historical user preferences and common design patterns from existing HMI screen templates.

6. The method according to any of the preceding claims, wherein the transmitted prompt further comprises:
additional contextual information comprising one of operator skill level and factory layout, to tailor the generated at least one HMI screen template to specific user needs.

7. The method according to any of the preceding claims, further comprising:
automatically suggesting a plurality of layout modifications, color schemes, and font styles for the generated at least one HMI screen template based on usability metrics.

8. The method according to any of the preceding claims, further comprising:
providing a user interface for operators to preview and customize the generated HMI screen templates before deployment.

9. The method according to any of the preceding claims, further comprising:
detecting operator feedback associated with interactions with the generated human-machine interface (HMI) screen template;
updating a machine learning (ML) model based on the detected operator feedback; and
modifying the generated HMI screen template using the updated ML model to enhance usability for the operator.

10. The method according to claim 9, further comprising:
applying reinforcement learning to iteratively improve the machine learning (ML) model based on operational feedback and evolving factory requirements.

11. The method according to claim 9 or 10, wherein updating the ML model further comprises:
analyzing operator interaction patterns with the HMI screen template to identify areas for usability improvement.

12. A programming system (102) for automatically generating optimized human-machine interface (HMI) screen templates, the programming system comprising:
one or more processor(s); and
a memory coupled to the one or more processor(s), wherein the memory comprises an automation module stored in the form of machine-readable instructions executable by the one or more processor(s), wherein the automation module is configured to perform a method according to any of the claims 1-11.

13. A computer-program product, having machine-readable instructions stored therein, that when executed by a processor, cause the processor to perform a method according to any of the claims 1-11.
